# EUROPÄISCHE PATENTSCHRIFT

(11) **EP 1 098 793 B1**
(45) Veröffentlichungstag und Bekanntmachung des Hinweises auf die Patenterteilung: **27.07.2005**
(21) Anmeldenummer: 00943644.5
(22) Anmeldetag: 25.05.2000
(51) Int. Cl.: B60S 1/34

(54) **ABKLAPPBARER WISCHARM**
FOLD-OUT WIPER ARM
BRAS D'ESSUIE-GLACE RABATTABLE

(30) Priorität: 02.06.1999 DE 19925388
(43) Veröffentlichungstag der Anmeldung: 16.05.2001
(73) Patentinhaber: ROBERT BOSCH GMBH, 70442 Stuttgart (DE)
(72) Erfinder: KRAEMER, Godelieve, D-76549 Huegelsheim (DE)
(74) Vertreter: Hörschler, Wolfram Johannes, Dipl.-Ing.
(86) Internationale Anmeldenummer: PCT/DE2000/001697
(87) Internationale Veröffentlichungsnummer: WO 2000/073109

(56) Entgegenhaltungen:
- EP-A- 0 788 951
- DE-A- 3 714 651
- US-A- 4 050 832

## Beschreibung

### Technisches Gebiet

Die Erfindung betrifft einen abklappbaren Wischarm, insbesondere für Kraftfahrzeuge, der durch Verschwenken in eine erste, federbelastete Arbeitsstellung bringbar ist und eine zweite Stellung in von der Arbeitsstellung abgeklappter Lage einnehmen kann.

Die Wischarme werden über eine auf Zug belastete Feder zur Windschutzscheibe eines Kraftfahrzeugs hingezogen. Um ein Wischerblatt auszuwechseln, ist es erforderlich, daß der Wischarm in eine Position verschwenkt wird, in welcher ein Wischblatt in einen Abstand zu der Windschutzscheibe gebracht wird, wobei in dieser Stellung eine Arretierung zu erfolgen hat. Diese Arretierung verhindert das Zurückschnappen des unter Längung der Zugfeder abgeklappten Wischarmes.

### Stand der Technik

Es ist bekannt, zum Zweck der Arretierung an der Aufhängung eine mit der Zugfeder verbundenen Bügelfeder vorzusehen, wobei während des Verdrehens des Wischarmes die Bügelfeder gegen das Wischarmgelenk gezogen wird und so ein Kipppunkt überschritten wird, wobei der abgeklappte Wischarm nicht zurückschnellt. Der Abklappwinkel ist hier in der Regel recht hoch, so daß der Wischarm eine recht hohe Abklapplage einnimmt.

Weiterhin ist bekannt, bei Verwendung von zwei nebeneinander liegenden Zugfedern, die von einer gemeinsamen Bügelfeder gehalten werden, einen durch eine dritte Feder belasteten Stift vorzusehen, der beim Abklappen von einem mit dem Wischarm verbundenen Stößel in eine Aussparung gedrückt wird. Zwar ist eine niedere Abklapplage des Wischarmes möglich, nachteilig ist jedoch, daß zur sicheren Arretierung eine dritte Feder erforderlich ist.

Eine weitere bekannte Abklapparretierung besteht darin, daß beim Hochziehen des Wischarmes ein Ring, der auf einem Stift mit genügend Spiel montiert ist und durch eine Federöse umfaßt ist, über einen Rastnocken geschoben wird. Der Ring wird zuerst entgegen der Federkraft über den Nocken nach vorne geschoben, um anschließend einzurasten. Die neue Position wird durch die Federspannung gehalten und der Wischarm bleibt in seiner abgeklappten Position stehen, um so eine niedere Abklapplage zu ermöglichen.

Ein Wischarm, bei dem eine Anpressdruckfeder einerseits an einem Gelenkteil und andererseits entweder direkt oder über einen Bügel am Befestigungsteil gelagert ist, ist aus DE-A 37 14 651 bekannt. In der Abklappstellung wirkt ein Gesperr entweder unmittelbar mit der Anpressdruckfeder oder über den Bügel mit ihr zusammen.

### Darstellung der Erfindung

Gegenüber den bekannten Lösungen wird bei dem Wischarm gemäß Anspruch 1 kein Zusatzteil benötigt und gleichwohl eine zuverlässige Arretierung sichergestellt.

Die Auflageflächen können auf einer Mittelrippe des Fortsatzes oder auf inneren Seitenwänden des Fortsatzes angeordnet sein. Um eine gleichmäßige Belastung herzustellen, weist die Bügelfeder zwei Schenkel auf, die einen Aufnahmebereich für die Zugfeder und einen Klemmbereich umfassen. Um eine sichere Lagerung an dem Befestigungsteil zu gewährleisten, kann die Bügelfeder im Bereich der Lagerung im wesentlichen parallele, unmittelbar benachbarte Schenkelabschnitte aufweisen. Weiterhin kann der Fortsatz eine Führung und die Bügelfeder eine der Führung entsprechende Konturierung aufweisen, wodurch die Bügelfeder während des Aufspreizens beim Abklappen des Gelenkteils zusätzlich geführt ist. Die Formgebung der Bügelfeder kann in die Zugfederösenform integriert werden, so daß auf eine Bügelfeder verzichtet werden kann.

Schließlich kann an dem Fortsatz eine mit dem Gelenkteil zusammenwirkende Anschlagfläche zur Begrenzung des Gelenkwegs vorgesehen sein. Diese kann auch im Befestigungsteil untergebracht sein, z. B. Anschlag der Bügelfeder als obere Begrenzung des Abklappbewegungswinkels.

### Zeichnung

In der Zeichnung ist ein Ausführungsbeispiel gemäß der Erfindung dargestellt. Es zeigt die:
- Fig. 1: einen Wischarm in Parklagestellung im Längsschnitt, die
- Fig. 2: den Wischarm aus Fig. 1 in abgeklappter Stellung, die
- Fig. 3: einen Schnitt längs der Linie A aus Fig. 1, die
- Fig. 4: einen Schnitt längs der Linie BB aus Fig. 2, die
- Fig. 5: eine Bügelfeder in Draufsicht, die
- Fig. 6: die Bügelfeder aus Fig. 5 in Seitenansicht, die
- Fig. 7: eine Ansicht von unten im Bereich des Wischarmgelenks des Wischarms aus Fig. 1 und die
- Fig. 8: eine Ansicht von unten auf den Wischarm in abgeklappter Stellung gemäß Fig. 2.

### Ausführungsbeispiel

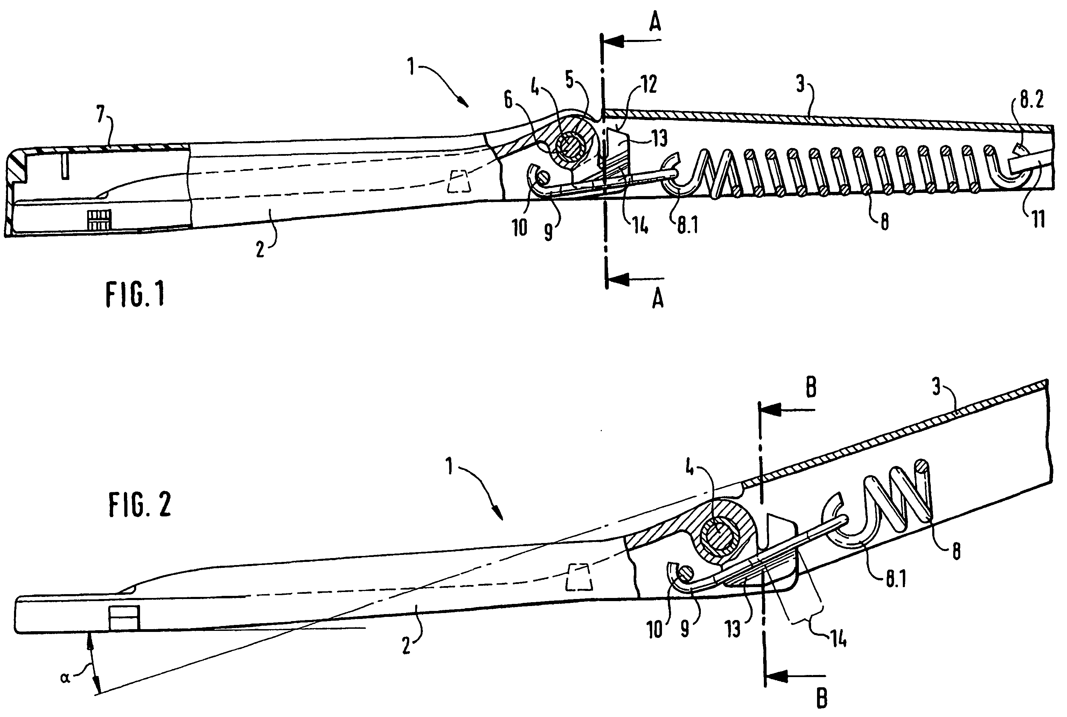

In Fig. 1 ist ein Wischarm in Parklagestellung, d.h. in Auflage des Wischblatts an einer Windschutzscheibe, dargestellt. Der Wischarm 1 weist ein Befestigungsteil 2 und ein Gelenkteil 3 auf, welche mittels eines Wischarmgelenks 4, bestehend aus Lagerbuchse 5 und Nietstift 6, miteinander verbunden sind. An dem Befestigungsteil 2 ist weiterhin eine Kappe 7 angebracht, welche zum Zweck der Befestigung des Befestigungsteils an einem Drehzapfen um das Wischarmgelenk 4 verschwenkbar ist.

Das Wischarmgelenk 4 ermöglicht ein Abklappen des Gelenkteils 3 gegenüber dem feststehenden Befestigungsteil 2 gegen die Kraft einer vorgespannten Zugfeder 8. Die Zugfeder 8 ist an ihrem einen Ende 8.1 in eine Bügelfeder 9 eingehängt, welche ihrerseits in einen mit dem Befestigungsteil 2 verbundenen Stift 10 eingehängt ist. Das andere Ende 8.2 der Zugfeder 8 ist in eine Öse 11 des Gelenkteils 3 eingehängt. Die Bügelfeder 9 kann auch entfallen und die Öse 8.1 wird dann ersetzt durch eine Formöse, die den Zweck der Bügelfeder mit übernimmt.

Zur Begrenzung der durch die Vorspannung der Zugfeder 8 vorhandenen Schrägstellung bei fehlender Auflage des Wischarms bzw. Wischblatts auf der Windschutzscheibe ist an dem Befestigungsteil 2 eine Auflagefläche 12 vorgesehen, welche mit einem entsprechendem Wandabschnitt des Gelenkteils 3 zusammenwirkt. Diese Auflagefläche 12 ist auf einem über das Wischarmgelenk 4 hinausgehenden Fortsatz 13 des Befestigungsteils 2 angeordnet. Dieser Fortsatz 13 hat darüber hinaus auch die Funktion, eine Arretierung des abgeklappten Gelenkteils 3 zu gewährleisten.

In Fig. 2 ist der Wischarm 1 in einer abgeklappten Stellung dargestellt, wobei zum Zweck der besseren Darstellbarkeit auf die Kappe am Befestigungsteil 2 verzichtet wurde. Das Gelenkteil 3 ist gegenüber dem Befestigungsteil 2 um einen Abklappwinkel α ≤ 30° von der Windschutzscheibe weggeklappt, wobei die Bügelfeder 9 durch einen Nocken 14 am Fortsatz 13 arretiert ist. Hierzu sind die Bügelfeder 9 und der Fortsatz 13 in besonderer Art und Weise ausgebildet, wie im folgenden erläutert wird.

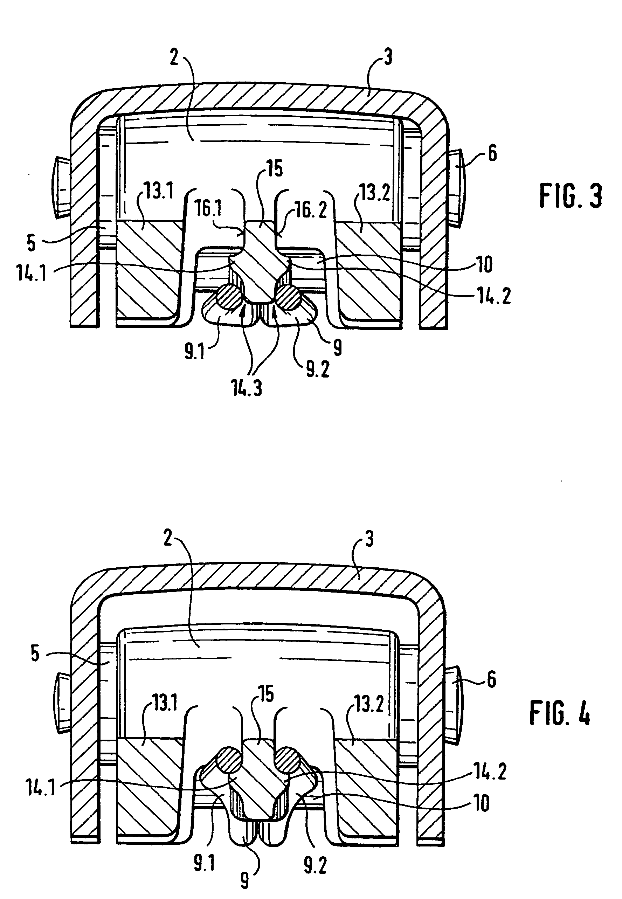

In Fig. 3 ist ein Schnitt längs der Linie AA aus Fig. 1 gezeigt. Zu erkennen ist das Gelenkteil 3, das sich wie eine Haube über den Fortsatz 13 am Ende des Befestigungsteils 2 wölbt. Das Wischarmgelenk wird durch Lagerbuchse 5 und den Nietstift 6 angedeutet.

Der Fortsatz 13 weist in seiner Mitte eine sich in Richtung der Zugfeder 8, d.h. in Längsrichtung des Wischarms, erstreckende Rippe 15 auf, an welcher auf jeder ihrer Seiten 16.1, 16.2 die Nockenauflage 14.1, 14.2 des Nockens 14 vorgesehen ist. Der an der Rippe 15 angeordnete Nocken 14 weist im Querschnitt ein glockenförmiges Ende 14.3 auf, wobei die Basis der Glocke durch die Nockenauflagen 14.1, 14.2 gebildet ist.

Das Nockenende 14.3 wird von zwei Schenkeln 9.1, 9.2 der Bügelfeder 9 umschlossen, wobei in den durch die Pfeile angedeuteten Bereichen zwischen der Bügelfeder 9 und dem Nockenende 14.3 im Arbeitsbereich des Wischarmes höchstens eine leichte Berührung erfolgen darf. Vorzugsweise findet jedoch in dieser Stellung keine Berührung statt, so daß keine Reibkräfte entstehen, die die Wirkung der Zugfeder beeinträchtigen könnten.

Die Zinken 13.1 und 13.2 des Fortsatzes 13 sind die bildlich dargestellten Schnittflächen in Schnitt A-A.

Statt eine Rippe 15 und der angebrachten Nocken 14 mit Nockenauflage 14.1 und 14.2 und glockenförmigem Ende 14.3 können an den Zinken 13.1 und 13.2 des Fortsatzes 13 entsprechende Auflageflächen, ähnlich der Anschlagflächen 14.1 bzw. 14.2, versehen sein, so daß die Bügelfeder nicht aufgespreizt, sondern zusammengedrückt wird.

In Fig. 4 ist die Bügelfeder 9 in ihrer Lage an der Mittelrippe 15 bei abgeklapptem Wischarm gezeigt. Die Schenkel 9.1, 9.2 liegen nun zur Mitte des Wischarms hin versetzt auf den Nockenauflagen 14.1, 14.2 derart auf, daß eine Arretierung trotz der Federkraft der Zugfeder 8 sichergestellt ist.

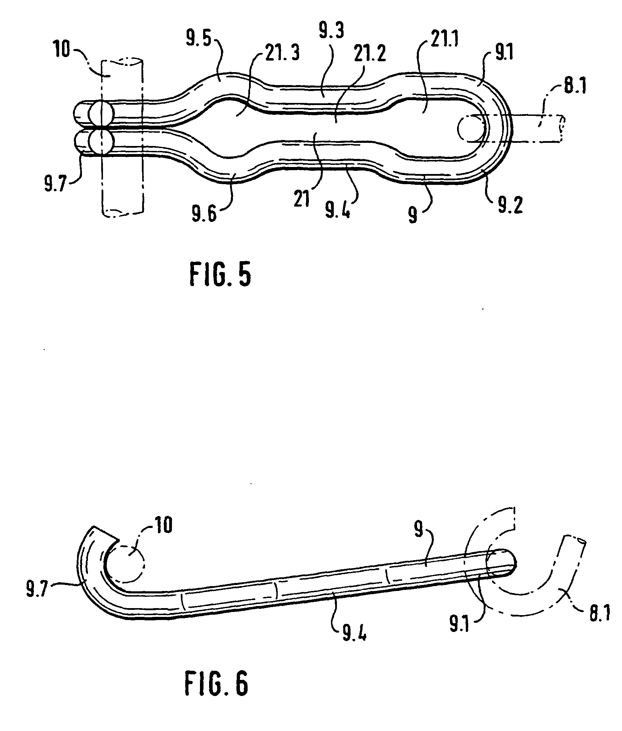

Um dies zu erreichen, ist eine in Fig. 5 dargestellte, besonders ausgestaltete Bügelfeder 9 vorgesehen. Die Bügelfeder 9 weist zwei Schenkel 9.1, 9.2 auf. Diese Schenkel 9.1, 9.2 liegen im wesentlichen parallel zueinander, wobei jedoch lediglich im Bereich der Lagerung am Bolzen 10 die Schenkel 9.1, 9.2 aneinander anliegen können. Im übrigen schließen sie einen Zwischenraum 21 ein, in welchen an dem den Bolzen 10 gegenüberliegendem Ende 8.1 die Zugfeder 8 eingreift. Hierzu weist der Raum 21 eine Aufweitung 21.1 auf, die gegenüber einem etwa im mittleren Bereich angeordneten Klemmraum 21.2 aufgeweitet ist. Dieser Klemmraum 21.2 wird von den Abschnitten 9.3, 9.4 der Schenkel 9.1 bzw. 9.2 begrenzt, die in abgeklappter Stellung des Wischarms entlang des im Querschnitt glockenförmigen Endes 14.3 des Nockens 14 auf den Nockenauflagen 14.1, 14.2 aufliegen.

An den Klemmraum 21.2 schließt sich ein Aufnahmeraum 21.3 zu dem an dem Stift 10 eingehängten Ende hin an, der gegenüber dem Klemmraum 21.2 ebenfalls aufgeweitet ist. Durch den kreisbogenförmigen Aufnahmeabschnitt 9.5 bzw. 9.6 wird die Elastizität der Bügelfeder vorteilhaft verändert, und es wird dabei eine Führungsmöglichkeit für die Bügelfeder 9 geschaffen.

Bei Anbringung der Auflageflächen 14.1 bzw. 14.2 an dem Fortsatz 13.1 bzw. 13.2, so daß die Bügelfeder beim Abklappen des Wischarmes zusammengedrückt wird, können die Zwischenräume 21.1, 21.2 und 21.3 und entsprechend die Begrenzungen 9.1, 9.2, 9.3, 9.4, 9.5 und 9.6 auch in einem anderen Verhältnis als dargestellt stehen, um die gleiche Arretierfunktion beim Abklappen zu bewerkstelligen.

In Fig. 6 ist eine Seitenansicht der Bügelfeder 9 gezeigt, wobei der im wesentlichen plane Aufbau der Bügelfeder mit Ausnahme eines hakenförmig gekrümmten Verankerungsbereichs 9.7 um den Stift 10 herum gezeigt ist.

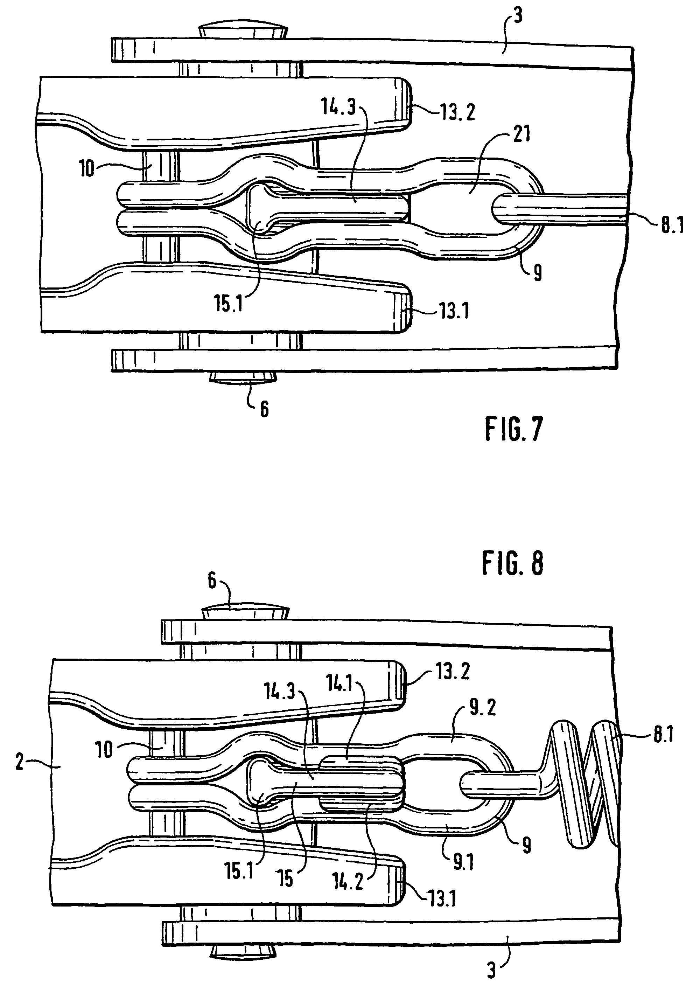

Die genauere Ausgestaltung der Arretierung zwischen Nocken 14 und Bügelfeder 9 ist in den Fig. 7 und 8 dargestellt. In Fig. 7 ist der Wischarm in seiner Ruhelage gezeigt, d.h. in Anlage an der Windschutzscheibe. Die Bügelfeder 9, in welche die Zugfeder mit ihrem Ende 8.1 eingehängt ist, ist an dem Bolzen 10 eingehakt und umschließt mit ihrem Innenraum 21 den Nocken 14 der Mittelrippe 15. Wie bereits erwähnt, erfolgt hier allenfalls eine lose Berührung. Die Mittelrippe 15 weist eine Verdickung 15.1 auf, welche sich in die Zeichenebene hinein erstreckt. Diese Verdickung 15.1 kommt in etwa in dem kreisbogenförmig ausgebildeten Bereich 9.5, 9.6 der Bügelfeder 9 zu liegen und sorgt für deren Führung während des Abklappens.

In Fig. 8 ist die Bügelfeder 9 durch das Abklappen des Gelenkteils 3 gegenüber dem Befestigungsteil 2 entlang des glockenförmigen Endes 14.3 über die Nockenauflage 14.1, 14.2 geführt worden, wobei sich die Bügelfeder 9 aufgespreizt und nach dem Vorbeigleiten an den Nockenauflagen 14.1, 14.2 wieder geschlossen hat. Es versteht sich von selbst, daß für dieses Aufspreizen der Schenkel 9.1, 9.2 der Bügelfeder 9 eine entsprechende Kraft aufzuwenden ist, welche nach dem Einschnappen der Schenkel 9.1, 9.2 hinter die Nockenauflage 14.1, 14.2 für eine sichere Arretierung sorgt. Die Arretierung ist im wesentlichen den aufgrund der Schwerkraft wirkenden Kräften ausgesetzt. Zusätzlich zu dem Gewicht des Gelenkteils 2 tritt noch das Gewicht eines Wischblatts, so daß bei der Bügelfeder 9 aufgrund des Hebelarms für eine ausreichende Federsteifigkeit zu sorgen ist. Die Wirkungsweise der Bügelfeder 9 ist dabei unabhängig von der anliegenden Federkraft der Zugfeder 8.

Die Verdickung 15.1 sorgt während des Aufspreizvorgangs der Bügelfeder 9 für eine zusätzliche Führung.

Es wird nochmals darauf hingewiesen, daß die Bügelfeder 9 in Parkstellung des Wischarms mit dem Nocken 14 der Mittelrippe 15 nicht in Eingriff steht, der Eingriff erfolgt erst mit dem Abklappen des Gelenkteils zum Zweck der Arretierung in der abgeklappten Stellung, beispielsweise um ein Wischblatt auszuwechseln.

## Patentansprüche

1. Abklappbarer Wischarm, insbesondere für Kraftfahrzeuge, aufweisend ein Befestigungsteil (2) und ein Gelenkteil (3), die über ein Wischanngelenk (4) miteinander derart verbunden sind, daß das Gelenkteil (3) um das Wischarmgelenk (4) unter Erreichen einer Arretierung (14) abklappbar ist, weiterhin aufweisend eine Zugfeder (8) und eine Bügelfeder (9), **dadurch gekennzeichnet, daß** die Bügelfeder (9) Klemmabschnitte (9.3, 9.4) aufweist und daß das Befestigungsteil (2) einen Fortsatz (13) mit Nockenauflageflächen (14.1, 14.2) aufweist, auf denen die Klemmabschnitte (9.3, 9.4) der Bügelfeder (9) in abgeklappter Stellung des Gelenkteils (3) aufliegen und die Bügelfeder (9) zwei Schenkel (9.1, 9.2) aufweist, die eine Aufweitung (21.1) für die Zugfeder (8) und einen Klemmraum (21.2) umfassen.

2. Abklappbarer Wischarm nach Anspruch 1, **dadurch gekennzeichnet, daß** die Nockenauflageflächen (14.1, 14.2) auf einer Rippe (15) des Fortsatzes (13) angeordnet sind.

3. Abklappbarer Wischarm nach Anspruch 1, **dadurch gekennzeichnet, daß** die Nockenauflageflächen (14.1, 14.2) auf inneren Seitenwänden (13.1, 13.2) des Fortsatzes (13) angeordnet sind.

4. Abklappbarer Wischarm nach Anspruch 1, **dadurch gekennzeichnet, daß** die Bügelfeder (9) einen Aufnahmeabschnitt (9.5, 9.6) bezüglich des Befestigungsteils (2) aufweist.

5. Abklappbarer Wischarm nach Anspruch 1 oder 4, **dadurch gekennzeichnet, daß** die Bügelfeder (9) im Bereich der Lagerung an dem Befestigungsteil (2) im wesentlichen parallele, unmittelbar benachbarte Schenkelabschnitte aufweist.

6. Abklappbarer Wischarm nach einem der Ansprüche 1 bis 5, **dadurch gekennzeichnet, daß** der Fortsatz (13) eine mit dem Gelenkteil (3) zusammenwirkende Anschlagfläche (12) zur Begrenzung des Gelenkwegs aufweist.

7. Abklappbarer Wischarm nach einem der Ansprüche 1 bis 6, **dadurch gekennzeichnet, daß** der Fortsatz (13) eine Verdickung (15.1) aufweist und daß die Bügelfeder (9) der Verdickung (15.1) entsprechende Aufnahmeabschnitte (9.5, 9.6) aufweist.

## Claims

1. Wiper arm which can be swung down, in particular for motor vehicles, having a fastening part (2) and an articulated part (3) which are connected to one another via a wiper-arm hinge (4) in such a manner that the articulated part (3) can be swung down around the wiper-arm hinge (4) with a locking means (14) being reached, furthermore having a tension spring (8) and a clip-type spring (9), **characterized in that** the clip-type spring (9) has clamping sections (9.3, 9.4), and **in that** the fastening part (2) has an extension (13) having cam supporting surfaces (14.1, 14.2) on which the clamping sections (9.3, 9.4) of the clip-type spring (9) rest in the swung-down position of the articulated part (3) and the clip-type spring (9) has two legs (9.1, 9.2) which comprise a socket (21.1) for the tension spring (8) and a clamping region (21.2).

2. Wiper arm which can be swung down according to Claim 1, **characterized in that** the cam supporting surfaces (14.1, 14.2) are arranged on a rib (15) of the extension (13).

3. Wiper arm which can be swung down according to Claim 1, **characterized in that** the cam supporting surfaces (14.1, 14.2) are arranged on inner side walls (13.1, 13.2) of the extension 13.

4. Wiper arm which can be swung down according to Claim 1, **characterized in that** the clip-type spring (9) has a section (9.5, 9.6) for receiving it with respect to the fastening part (2).

5. Wiper arm which can be swung down according to Claim 1 or 4, **characterized in that** the clip-type spring (9) has essentially parallel, directly adjacent leg sections in the region of the mounting on the fastening part (2).

6. Wiper arm which can be swung down according to one of Claims 1 to 5, **characterized in that** the extension (13) has a stop surface (12) which interacts with the articulated part (3) and is intended for limiting the path of articulation.

7. Wiper arm which can be swung down according to one of Claims 1 to 6, **characterized in that** the extension (13) has a thickening (15.1), and **in that** the clip-type spring (9) of the thickened area (15.1) has corresponding receiving sections (9.5, 9.6).

## Revendications

1. Bras d'essuie-glace rabattable, en particulier pour des véhicules automobiles, muni d'une pièce de fixation (2) et d'une pièce d'articulation (3) reliées l'une à l'autre par l'intermédiaire d'une articulation d'essuie-glace (4) de telle manière que la pièce d'articulation (3) peut être rabattue autour de l'articulation d'essuie-glace (4) lorsqu'elle atteint un arrêt (14), et muni en outre d'un ressort de traction (8) et d'un ressort en étrier (9),
**caractérisé en ce que**
le ressort en étrier (9) présente des segments de blocage (9.3, 9.4), et la pièce de fixation (2) présente un prolongement (13) muni de portées de came (14.1, 14.2) sur lesquelles les segments de blocage (9.3, 9.4) du ressort en étrier (9) reposent lorsque la pièce d'articulation (3) est en position rabattue, et le ressort en étrier (9) présente deux branches (9.1, 9.2) qui entourent un élargissement (21.1) pour le ressort de traction (8) et un espace de blocage (21.2.).

2. Bras d'essuie-glace rabattable selon la revendication 1,
**caractérisé en ce que**
les portées de came (14.1, 14.2) sont disposées sur une nervure (15) du prolongement (13).

3. Bras d'essuie-glace rabattable selon la revendication 1,
**caractérisé en ce que**
les portées de came (14.1, 14.2) sont disposées sur des parois latérales (13.1, 13.2) intérieures du prolongement (13).

4. Bras d'essuie-glace rabattable selon la revendication 1,
**caractérisé en ce que**
le ressort en étrier (9) présente un segment de réception (9.5, 9.6) destiné à la pièce de fixation (2).

5. Bras d'essuie-glace rabattable selon la revendication 1 ou 4,
**caractérisé en ce que**
le ressort en étrier (9) présente, dans la zone où il s'appuie à la pièce de fixation (2), des segments de branche presque parallèles et directement contigus.

6. Bras d'essuie-glace rabattable selon l'une des revendications 1 à 5,
**caractérisé en ce que**
le prolongement (13) présente une surface de butée (12) qui coopère avec la pièce d'articulation (3) et sert à limiter la course d'articulation.

7. Bras d'essuie-glace rabattable selon l'une des revendications 1 à 6,
**caractérisé en ce que**
le prolongement (13) présente un épaississement (15.1), et
le ressort en étrier (9) présente des segments de réception (9.5, 9.6) correspondants à l'épaississement (15.1).
